# EUROPEAN PATENT APPLICATION

(11) **EP 3 410 366 A1**
(43) Date of publication of application: **05.12.2018**
(21) Application number: 17186069.5
(22) Date of filing: 11.08.2017
(51) Int. Cl.: G06Q 10/08, G06Q 10/00

(54) **METHOD AND SYSTEM FOR TRACKING AND MANAGING REGULATORY CERTIFICATES OF AIRCRAFT COMPONENTS**

(30) Priority: 29.05.2017 IN 201741018812
(71) Applicant: Wipro Limited, 560 035 Karnataka (IN)
(72) Inventor: NARASIMHAN, Parthasarathy, 560061 Bangalore (IN)
(74) Representative: Finnegan Europe LLP

(57) **Abstract**

This disclosure relates to method and system for tracking and managing regulatory certificates of aircraft components. In one embodiment, a method is provided for tracking and managing regulatory certificates of an aircraft component during a lifecycle of the aircraft component. The method includes registering various entities involved in various stages of the lifecycle of the aircraft component, creating multiple records for at least a set of entities corresponding to a regulatory certificate, and updating a record from among the multiple records upon a transaction with a subsequent entity from among the various entities involved in a subsequent stage from among the various stages. Each of the records comprises a number of regulatory parameters. Further, the regulatory certificate is obtained from a regulatory body upon request by an entity from among the various entities involved in a stage from among the various stages.

## Description

### Technical Field

This disclosure relates generally to aircraft manufacturing and maintenance, and more particularly to a method and system for tracking and managing regulatory certificates of aircraft components.

### Background

Aircraft manufacturing and maintenance is a complex process where strict quality controls are adopted. For example, every supplier for each and every component of an aircraft is required to obtain an airworthiness certificate so as to conform to a quality compliance mandated by a regulatory authority (for example, Federal Aviation Administration (FAA)). Further, it is also required that certificates and shipments are tracked with reference to airworthiness throughout life of the aircraft for quality audits and security purposes. Thus, airworthiness approval certification is required to approve and certify new and used components of the aircraft to conform to requirements of the regulatory authority with respect to original airworthiness. Further, the airworthiness approval certification also certifies approval for return to service following maintenance of components, from the regulatory authority, with respect to recurrent airworthiness.

Existing airworthiness certificate tracking techniques combine and use several disparate systems (for example, enterprise resource planning (ERP) systems, custom solutions, maintenance repair and overhaul (MRO) systems) at every level of a supply chain. However, most of these systems are not connected with a single network, and every supply node stores, shares, or tracks the certificate or digital assets in a complex way. It is therefore cumbersome to quickly trace the source of origin of forms, changes to the forms, and links to prior forms due to involvement of different systems and network issues.

### SUMMARY

In one embodiment, a method of tracking and managing regulatory certificates of an aircraft component during a lifecycle of the aircraft component is disclosed. In one example, the method includes registering a plurality of entities involved in a plurality of stages of the lifecycle of the aircraft component. The method further includes creating a plurality of records for at least a set of the plurality of entities corresponding to a regulatory certificate. The method further includes updating a record from among the plurality of records upon a transaction with a subsequent entity from among the plurality of entities involved in a subsequent stage from among the plurality of stages. The regulatory certificate is obtained from a regulatory body upon request by an entity from among the plurality of entities involved in a stage from among the plurality of stages. Further, each of the plurality of records comprises a plurality of regulatory parameters. Any of the steps of the method disclosed herein may be performed by a regulatory certificate tracking and management system.

In one embodiment, a system for tracking and managing regulatory certificates of an aircraft component during a lifecycle of the aircraft component is disclosed. In one example, the system includes at least one processor and a memory communicatively coupled to the at least one processor. The memory stores processor-executable instructions, which, on execution, cause the processor to register a plurality of entities involved in a plurality of stages of the lifecycle of the aircraft component. The processor-executable instructions, on execution, further cause the processor to create a plurality of records for at least a set of the plurality of entities corresponding to a regulatory certificate. The processor-executable instructions, on execution, further cause the processor to update a record from among the plurality of records upon a transaction with a subsequent entity from among the plurality of entities involved in a subsequent stage from among the plurality of stages. The regulatory certificate is obtained from a regulatory body upon request by an entity from among the plurality of entities involved in a stage from among the plurality of stages. Further, each of the plurality of records comprises a plurality of regulatory parameters.

In one embodiment, a non-transitory computer-readable medium storing computer-executable instructions for tracking and managing regulatory certificates of an aircraft component during a lifecycle of the aircraft component is disclosed. In one example, the stored instructions, when executed by a processor, cause the processor to perform operations including registering a plurality of entities involved in a plurality of stages of the lifecycle of the aircraft component. The operations further include creating a plurality of records for at least a set of the plurality of entities corresponding to a regulatory certificate. The operations further include updating a record from among the plurality of records upon a transaction with a subsequent entity from among the plurality of entities involved in a subsequent stage from among the plurality of stages. The regulatory certificate is obtained from a regulatory body upon request by an entity from among the plurality of entities involved in a stage from among the plurality of stages. Further, each of the plurality of records comprises a plurality of regulatory parameters.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates a typical system for tracking and managing regulatory certificates of aircraft components.
**FIG. 2** illustrates an architecture of an exemplary system for tracking and managing regulatory certificates of aircraft components in accordance with some embodiments of the present disclosure.
**FIG. 3** is a flow diagram of an exemplary process for tracking and managing regulatory certificates of aircraft components in accordance with some embodiments of the present disclosure.
**FIG. 4** is a flow diagram of a detailed exemplary process for tracking and managing regulatory certificates of aircraft components in accordance with some embodiments of the present disclosure.
**FIG. 5** is an exemplary table depicting various transaction scenarios during tracking and managing regulatory certificates of aircraft components in accordance with some embodiments of the present disclosure.
**FIG. 6** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

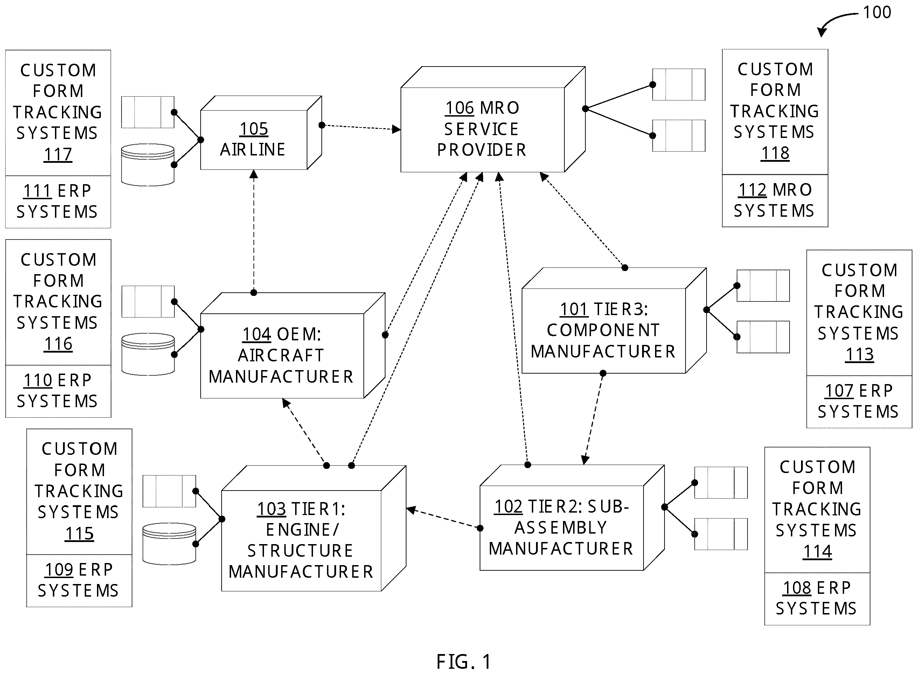

Referring now to FIG. 1, a typical system 100 for tracking and managing regulatory certificates of aircraft components is illustrated. The system 100 includes various entities 101 - 106 involved in various stages of the lifecycle of an aircraft component. These entities include, but are not limited to, a tier-3 component manufacturer 101, a tier-2 sub-assembly manufacturer 102, a tier-1 engine or structure manufacturer 103, an original equipment manufacturer (OEM) or an aircraft manufacturer 104, an airline or an aircraft operator 105, and a maintenance, repair, and overhaul (MRO) service provider 106. As will be appreciated, the tier-3 component manufacturer 101 manufactures and supplies various components to the tier-2 sub-assembly manufacturer 102, which in turn manufactures a sub-assembly using the components. The tier-2 sub-assembly manufacturer 102 further supplies the sub-assembly to the tier-1 engine or structure manufacturer 103, which in turn manufactures an engine or a structure used in an aircraft using the sub-assemblies. The tier-1 engine or structure manufacturer 103 further supplies the engine or the structure to the aircraft manufacturer 104, which in turn builds the aircraft using the engines and the structures. The aircraft manufacturer 104 supplies the aircraft to the airline 105 which operates the aircraft. Further, each of the tier-3 component manufacturer 101, tier-2 sub-assembly manufacturer 102, tier-1 engine or structure manufacturer 103, aircraft manufacturer 104, and airline 105 may employ the service of the MRO service provider 106 for maintenance, repair, and overhaul of the components, sub-assemblies, engines, structures, and aircrafts.

As stated above, each of the entities 101 - 106 is required to obtain an airworthiness certificate from a regulatory authority (for example, the Federal Aviation Administration (FAA)). It is also required that all the certificates and shipments are tracked with reference to the airworthiness throughout the life of the aircraft for quality audits and security purposes. The regulatory authority has elaborated and placed requirements for certificate tracking of airworthiness approval certification. For example, the FAA uses form 8130 to provide proof and documentation that the specific part of the aircraft came from a specific manufacturer. Another FAA form 8130-3 should be correlated with every shipment. An airworthiness approval tag should become a part of the aircraft permanent records. Additionally, it is required to provide a secured electronic auditing system that reflects all system changes. It is also required to have a secured monitoring system that records all transactions by items such as part number, serial number (when applicable), and quantity shipped. For bulk shipments, FAA form 8130-3 may be used to split bulk shipments of previously shipped new products or articles. Moreover, a new tracking number for this portion of the split bulk shipment is required with a reference to the prior FAA form tracking number.

However, as stated above, each of the entities 101 - 106 may employ several disparate systems and solutions (for example, ERP systems 107 - 111, MRO systems 112, and custom form tracking systems and solutions 113 - 118) for tracking and managing regulatory certificates of aircraft components. Most of these systems are not connected with each other. Further every supply node stores, shares, or tracks the certificate or digital assets in complex way. It is therefore cumbersome to quickly trace the source of origin of forms, the changes to the forms, and links to the prior forms due to involvement of different systems and network issues.

It is therefore desirable to provide an efficient, secure, and trustworthy technique for tracking and managing regulatory certificates of aircraft components. It is also desirable to provide a technique with enhanced transparency and accountability among various entities involved in various stages of the lifecycle of an aircraft component.

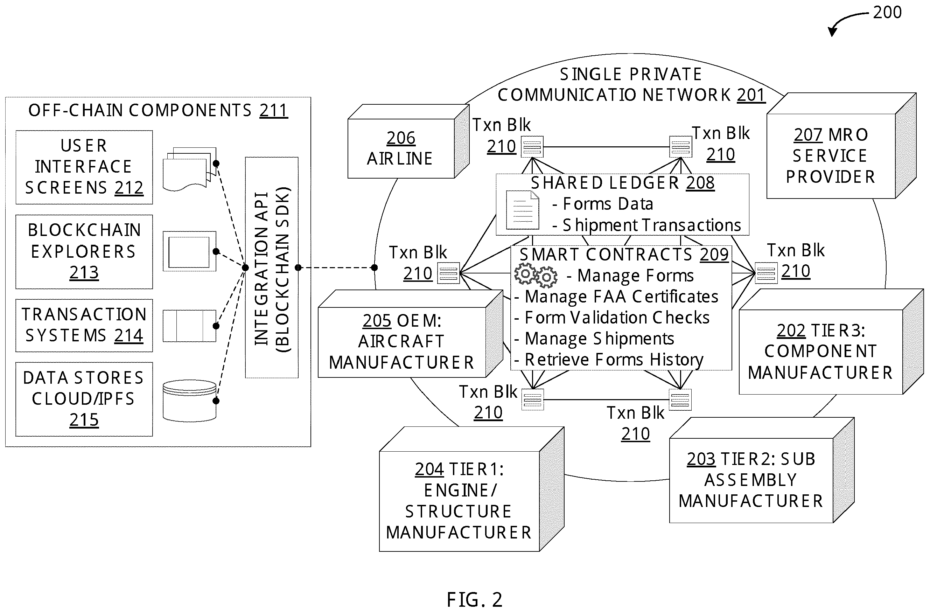

Referring now to FIG. 2, an architecture of an exemplary system 200 for tracking and managing regulatory certificates of aircraft components is illustrated, in accordance with some embodiments of the present disclosure. The architecture depicts various components and modules that work together to implement the overall system 200. The regulatory certificate tracking and management system 200 may employ a single private communication network 201 among all entities in the entire supply chain for tracking and managing regulatory certificates of aircraft components. The single private network 201 may include, but is not limited to, a blockchain network, a permissioned blockchain network, and so forth. All entities 202 - 207 in the entire supply chain may be connected with each other via the single private communication network 201. As above, the entities may include, but are not limited to, a tier-3 component manufacturer 202, a tier-2 sub-assembly manufacturer 203, a tier-1 engine or structure manufacturer 204, an original equipment manufacturer (OEM) or an aircraft manufacturer 205, an airline 206, and a maintenance, repair, and overhaul (MRO) service provider 207.

Each of the entities 202 - 207 may be accessible by authorized parties based on a shared ledger facility 208, provided by the single private communication network 201, for storing certificates or digital assets. For example, the shared ledger facility 208 may be similar to or based on blockchain shared ledger facility. Further, the system 200 provides for instant sharing of certificates or digital assets, such as form 8130 and form 8130-3. In some embodiments, the system 200 may also facilitate tracking of changes in the digital assets like approved quantity against shipped quantity via smart contracts facility 209. The single private communication network 201 enables quick accessibility using unique references (for example, block references), thereby making convenient tracking of a number of aircraft components and the certificates related to aircraft manufacturing, shipping, and airworthiness. The single private communication network 201 further enables instant exploration, thereby making convenient any auditing task.

As stated, the single private communication network 201 may be a standard or a permissioned blockchain network based on blockchain based technology. The blockchain based technology provides many advantages. For example, all transactions in blockchain network are performed through verifiable immutable transaction blocks 210. Thus, any transaction may not be altered or deleted. Further, blockchain based technology provides for a distributed database, and a single public ledger facility or a shared ledger facility 208, thereby allowing instant availability of digital assets or changes to all participating nodes or entities 202 - 207 in the blockchain network. This enables reduction of clutter and complications of multiple ledgers. Additionally, in some embodiments, the permission to access the permissioned block chain network may be managed by the respective parties, and every transaction is authorized based on consensus. The permissioned peer-to-peer model for all participating nodes or entities 202 - 207 with equal stake in the blockchain network ensures distributed ownership and risk amongst all stakeholders. Moreover, the use of cryptography ensures that the digital assets are stored in a safe and secured manner.

The application of blockchain technology provides an automatic audit trail, thereby enabling tracking and tracing of the state of a digital asset such as FAA 8130 certificate of the smallest component. The shared ledger facility 208 is accessible by every participating node (i.e., entities) 202 - 207 of the block chain network 201, thereby ensuring that a tamper-proof and reliable version of data is available for validation and verification purposes to all participants. By enhancing accountability of each participant in the supply chain, blockchain can also prevent counterfeiting of components and ensure that each part being used in manufacturing the aircraft comes from a genuine partner supplier. Smart contracts facility 209 may be leveraged to introduce automation and improvement in the business process of maintaining logs of aircraft parts - alerting aircraft owner as to which parts are due to be inspected for maintenance and repair.

In some embodiments, all the supply nodes 202 - 207 access block chain to create a record of an event when a new regulatory certificate is obtained by an entity from a regulator body (for example, 8130 certificate from FAA). Each node 202 - 207 may then employ blockchain to update the record against each certificate using one or more transaction blocks 210 while shipping and delivering respective parts/products to the next level node. Further, the system includes a variety of applications that acts as an interface between business systems and the blockchain network. These off-chain components 211 include, but are not limited to, user interface screens 212, blockchain explorers 213, transaction systems 214, and any data storage systems 215. The user interface 212 may be provided between the blockchain permissioned network 201 and other off-chain components such as blockchain explorers 213, transaction systems 214, and any data storage systems 215. The interface program uses blockchain based smart contracts facility 209 and shared ledger facility 208 for creating new block reference when a new 8130 certificate record is created. After creating new block reference, the validations of the supply nodes 202 - 207, and certificates may be managed. Further, the changes to the certificates like shipments and linkages of each certificate with any other certificate may be properly managed. Additionally, the system 200 helps to retrieve history related to each form and their changes for performing audit.

It should be noted that the regulatory certificate tracking and management system 200 may be implemented in programmable hardware devices such as programmable gate arrays, programmable array logic, programmable logic devices, and so forth. Alternatively, the system 200 may be implemented in software for execution by various types of processors. An identified engine of executable code may, for instance, include one or more physical or logical blocks of computer instructions which may, for instance, be organized as an object, procedure, function, module, or other construct. Nevertheless, the executables of an identified engine need not be physically located together, but may include disparate instructions stored in different locations which, when joined logically together, include the engine and achieve the stated purpose of the engine. Indeed, an engine of executable code could be a single instruction, or many instructions, and may even be distributed over several different code segments, among different applications, and across several memory devices.

Further, as will be appreciated by one skilled in the art, a variety of processes may be employed for rendering resolution for an incident ticket. For example, the exemplary system 200 may track and manage regulatory certificates of an aircraft component during a lifecycle of the aircraft component by the processes discussed herein. In particular, as will be appreciated by those of ordinary skill in the art, control logic and/or automated routines for performing the techniques and steps described herein may be implemented by the system 200, either by hardware, software, or combinations of hardware and software. For example, suitable code may be accessed and executed by the one or more processors on the system 200 to perform some or all of the techniques described herein. Similarly, application specific integrated circuits (ASICs) configured to perform some or all of the processes described herein may be included in the one or more processors on the system 200.

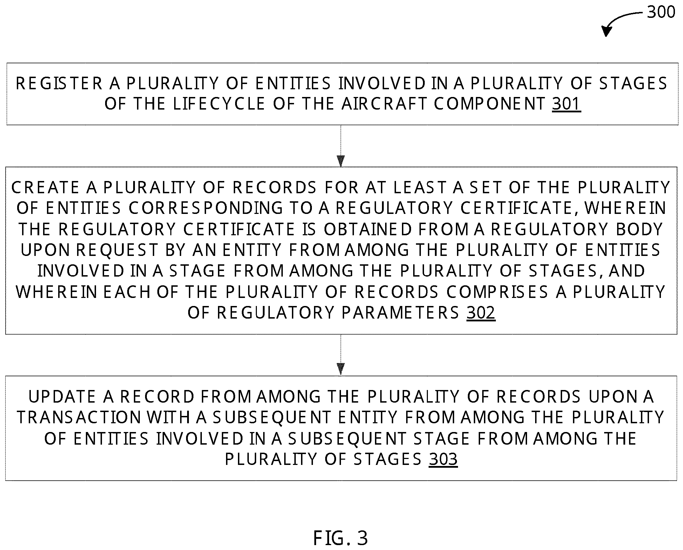

For example, referring now to FIG. 3, exemplary control logic 300 for tracking and managing regulatory certificates of an aircraft component during a lifecycle of the aircraft component via a system, such as system 200, is depicted via a flowchart in accordance with some embodiments of the present disclosure. As illustrated in the flowchart, the control logic 300 includes the steps of registering a plurality of entities involved in a plurality of stages of the lifecycle of the aircraft component at step 301, creating a plurality of records for at least a set of the plurality of entities corresponding to a regulatory certificate at step 302, and updating a record from among the plurality of records upon a transaction with a subsequent entity from among the plurality of entities involved in a subsequent stage from among the plurality of stages at step 303. It should be noted that the regulatory certificate is obtained from a regulatory body upon request by an entity from among the plurality of entities involved in a stage from among the plurality of stages. Further, it should be noted that each of the plurality of records comprises a plurality of regulatory parameters.

In some embodiments, each of the plurality of entities includes at least one of a component manufacturer, a sub-assembly manufacturer, an engine manufacturer, a structure manufacturer, an aircraft manufacturer, an airline, and a maintenance and repair service provider. Further, in some embodiments, the regulatory certificate includes at least one of an airworthiness certificate, and a shipment certificate.

In some embodiments, registering the plurality of entities at step 301 includes creating a blockchain network comprising a plurality of nodes, and a single shared ledger for the plurality of nodes for storing the plurality of records. In such embodiments, registering the plurality of entities at step 301 further includes registering the plurality of entities as the plurality of nodes in the blockchain network. Additionally, in such embodiments, the blockchain network is a permissioned blockchain network. Further, in such embodiments, a permission to access the blockchain network is managed by at least one of the plurality of entities. Moreover, in such embodiments, the transaction among two or more of the plurality of entities is authorized based on a consensus. In such embodiments, updating the record from among the plurality of records at step 303 includes creating a verifiable immutable transaction block corresponding to the transaction, and updating the record based on the verifiable immutable transaction block.

In some embodiments, creating each of the plurality of records at step 302 includes creating a form along with the regulatory certificate. In such embodiments, updating the record at step 303 includes creating a fresh form with references and links to one or more prior forms. Further, in some embodiments, each of the plurality of regulatory parameters comprises at least one of a component number, a serial number, a record tracking number, a date, an authorization number, an approved quantity, and a shipped quantity. Moreover, in some embodiments, the control logic 300 may further include the step of validating the plurality of records for compliance to a regulatory guideline provided by the regulatory body.

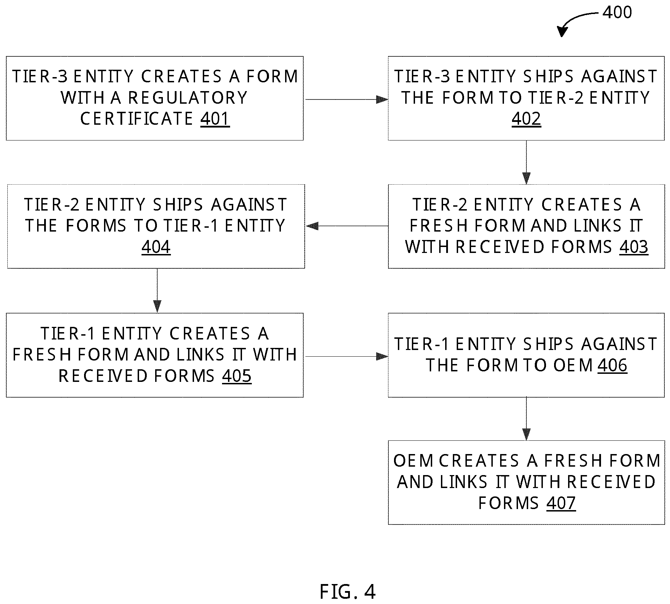

Referring now to FIG. 4, exemplary control logic 400 for tracking and managing regulatory certificates of an aircraft component during a lifecycle of the aircraft component is depicted in greater detail via a flowchart in accordance with some embodiments of the present disclosure. As illustrated in the flowchart, at step 401, a tier-3 entity (for example, the tier-3 component manufacturer 201) creates a form with a regulatory certificate (for example, FAA certificate). At step 402, the tier-3 entity ships against the form to a tier-2 entity (for example, the tier-2 sub-assembly manufacturer 202). At step 403, the tier-2 entity creates a fresh form and links the same with all the forms received from the tier-3 entity (i.e., prior forms). At step 404, the tier-2 entity ships against the forms to a tier-1 entity (for example, the tier-1 engine or structure manufacturer 203). At step 405, the tier-1 entity creates a fresh form and links the same with all the forms received from the tier-2 entity (i.e., prior forms). At step 406, the tier-1 entity ships against the forms to an original equipment manufacturer (OEM) entity (for example, the aircraft manufacturer 204). At step 407, the OEM entity creates a fresh form and links the same with all the forms received from the tier-1 entity (i.e., prior forms). The control logic 400 may similarly allow for creation of fresh forms and shipment against the forms for all the transactions with MRO service providers, and all other such transactions.

By way of example, when a new FAA 8130 certificate is obtained, every participating nodes (i.e., entities) in the supply network creates a new record in the blockchain network. When any shipment is done against a particular form or multiple forms, the respective supply node creates a shipment transaction and select the next level node. The above action initiates a transaction between the nodes, and the shipment information along with the 8130 form may be instantly communicated to all the concerned parties. After informing all parties, the next level supply node assembles the previous level part/product in their assembled product, and then it creates a new 8130 form record with reference and link to the prior forms. This process continues up to the level of OEM, and sometimes up to the MRO service provider. Additionally, the proposed system 200 and associated control logics 300 and 400 provide for a querying capability so as to perform audit. Further, the system 200 provides completed audit trails and linkages to the 8130 certificate upon user query.

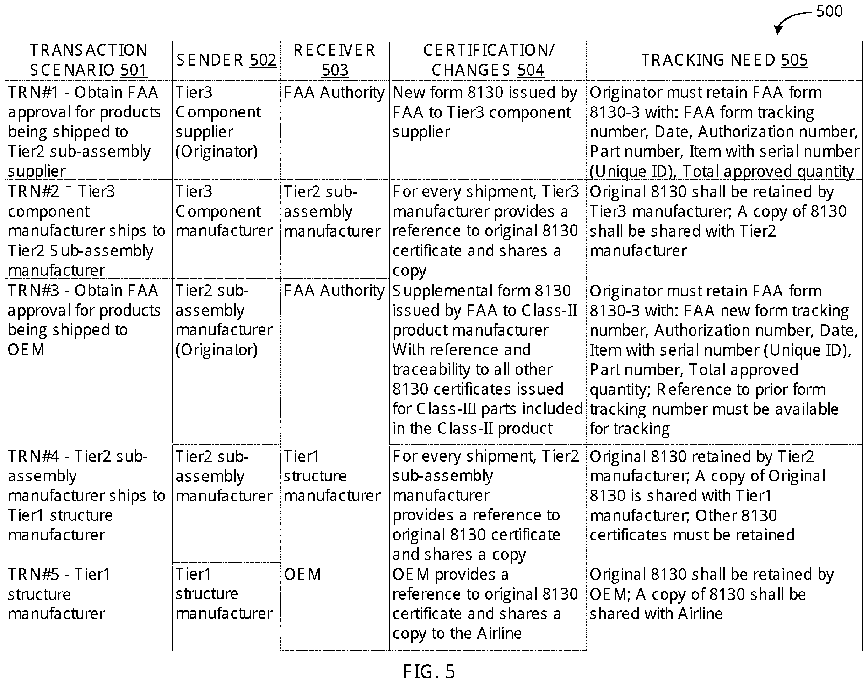

Referring now to FIG. 5, an exemplary table 500 depicting various transaction scenarios 501 during tracking and managing regulatory certificates of aircraft components is illustrated, in accordance with some embodiments of the present disclosure. Each of the transactions scenarios 501 is depicted along with its respective sender 502 and receiver 503. Further, each of the transactions scenarios 501 involve associated certifications or changes in the form(s) 504, and associated tracking need 505.

As will be also appreciated, the above described techniques may take the form of computer or controller implemented processes and apparatuses for practicing those processes. The disclosure can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

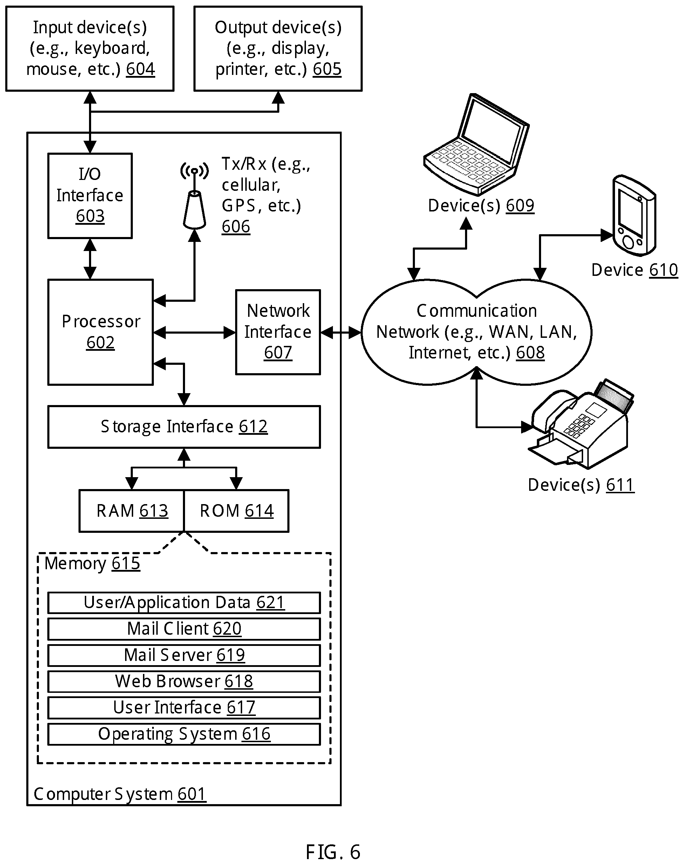

The disclosed methods and systems may be implemented on a conventional or a general-purpose computer system, such as a personal computer (PC) or server computer. Referring now to FIG. 6, a block diagram of an exemplary computer system 601 for implementing embodiments consistent with the present disclosure is illustrated. Variations of computer system 601 may be used for implementing system 200 for tracking and managing regulatory certificates of aircraft components. Computer system 601 may include a central processing unit ("CPU" or "processor") 602. Processor 602 may include at least one data processor for executing program components for executing user-generated or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 609, 610, and 611. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 602 may be disposed in communication with one or more memory devices (e.g., RAM 613, ROM 614, etc.), collectively referred to as memory 615, via a storage interface 612. The storage interface 612 may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices 615 may store a collection of program or database components, including, without limitation, an operating system 616, user interface application 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. (e.g., regulatory certificates, records or forms, regulatory parameters, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above provide for an efficient, secure, and trustworthy mechanism for tracking and managing regulatory certificates of aircraft components. Additionally, the techniques enable tracking of the certificates along with tracking of goods. Further, the techniques provide for decentralized governance, increased trust, and enhanced transparency and accountability among various entities involved in various stages of the lifecycle of an aircraft component. The techniques prevents or limits the possibility of counterfeiting in aircraft components supply chain. The techniques further provide for tamper proof audit trail of regulatory certificates.

Further, as will be appreciated by those skilled in the art, the techniques described in the various embodiments discussed above reduce the duplication of efforts at every node and instantaneously communicates to all nodes in the blockchain network. Additionally, the techniques increase the efficiency in tracking regulatory certificates with limited or no paper trail. Moreover, as will be appreciated by those skilled in the art, the techniques may be extended, by configuring smart contracts, to detect imminent maintenance, repair schedules, and to subsequently notify concerned suppliers/MROs. In some embodiments, the techniques described in the various embodiments discussed above employ a blockchain based tracking mechanism to achieve the above objectives and advantages.

The specification has described system and method for tracking and managing regulatory certificates of aircraft components. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A computer-implemented method of tracking and managing regulatory certificates of an aircraft component during a lifecycle of the aircraft component, the method comprising:
registering a plurality of entities involved in a plurality of stages of the lifecycle of the aircraft component;
creating a plurality of records for at least a set of the plurality of entities corresponding to a regulatory certificate, wherein the regulatory certificate is obtained from a regulatory body upon request by an entity from among the plurality of entities involved in a stage from among the plurality of stages, and wherein each of the plurality of records comprises a plurality of regulatory parameters; and
updating a record from among the plurality of records upon a transaction with a subsequent entity from among the plurality of entities involved in a subsequent stage from among the plurality of stages.

2. The method of claim 1, wherein each of the plurality of entities comprises at least one of a component manufacturer, a sub-assembly manufacturer, an engine manufacturer, a structure manufacturer, an aircraft manufacturer, an airline, and a maintenance and repair service provider.

3. The method of claim 1 or claim 2, wherein the regulatory certificate comprises at least one of an airworthiness certificate, and a shipment certificate.

4. The method of any of the preceding claims, wherein registering the plurality of entities comprises:
creating a blockchain network comprising a plurality of nodes, and a single shared ledger for the plurality of nodes for storing the plurality of records; and
registering the plurality of entities as the plurality of nodes in the blockchain network.

5. The method of claim 4, wherein the blockchain network is a permissioned blockchain network, wherein a permission to access the blockchain network is managed by at least one of the plurality of entities, and wherein the transaction among two or more of the plurality of entities is authorized based on a consensus.

6. The method of claim 4 or claim 5, wherein updating the record from among the plurality of records comprises:
creating a verifiable immutable transaction block corresponding to the transaction; and
updating the record based on the verifiable immutable transaction block.

7. The method of any of the preceding claims, wherein creating each of the plurality of records comprises creating a form along with the regulatory certificate, and wherein updating the record comprises creating a fresh form with references and links to one or more prior forms.

8. The method of any of the preceding claims, wherein each of the plurality of regulatory parameters comprises at least one of a component number, a serial number, a record tracking number, a date, an authorization number, an approved quantity, and a shipped quantity.

9. The method of any of the preceding claims, further comprising:
validating the plurality of records for compliance to a regulatory guideline provided by the regulatory body.

10. A system for tracking and managing regulatory certificates of an aircraft component during a lifecycle of the aircraft component, the system comprising:
at least one processor; and
a computer-readable medium storing instructions that, when executed by the at least one processor, cause the at least one processor to perform the method of any of the preceding claims.

11. A non-transitory computer-readable medium storing computer-executable instructions for performing the method of any of claims 1 to 9.
